(19) Europäisches Patentamt
European Patent Office
Office européen des brevets

(11) EP 1 834 990 B1

(12) **EUROPEAN PATENT SPECIFICATION**

(45) Date of publication and mention of the grant of the patent:
**07.03.2012 Bulletin 2012/10**

(21) Application number: **05816557.2**

(22) Date of filing: **19.12.2005**

(51) Int Cl.:
***C08L 27/12*** *(2006.01)* ***C08L 83/05*** *(2006.01)*
***C09K 3/10*** *(2006.01)* ***C08K 5/54*** *(2006.01)*

(86) International application number:
**PCT/JP2005/023285**

(87) International publication number:
**WO 2006/068099 (29.06.2006 Gazette 2006/26)**

(54) **RUBBER COMPOSITION AND SEALING MATERIAL FOR PLASMA TREATMENT DEVICE**

KAUTSCHUKZUSAMMENSETZUNG UND DICHTUNGSMATERIAL FÜR PLASMABEHANDLUNGSVORRICHTUNG

COMPOSITION DE CAOUTCHOUC ET MATERIAU D'ETANCHEITE POUR UN DISPOSITIF DE TRAITEMENT AU PLASMA

(84) Designated Contracting States:
**DE FR IE IT**

(30) Priority: **20.12.2004 JP 2004368377**

(43) Date of publication of application:
**19.09.2007 Bulletin 2007/38**

(73) Proprietor: **NIPPON VALQUA INDUSTRIES, LTD.**
**Sinjuku-ku,**
**Tokyo 163-0406 (JP)**

(72) Inventors:
- **AKAMATSU, Yoshiko,**
**c/o Nippon Valqua Ind., Ltd.**
**Gojo-shi, Nara 6370014 (JP)**
- **TSUTSUI, Takanori,**
**c/o Nippon Valqua Ind., Ltd.**
**Gojo-shi, Nara 6370014 (JP)**
- **MAEDA, Ichinosuke,**
**c/o Nippon Valqua Ind. Ltd.**
**Gojo-shi, Nara 6370014 (JP)**

(74) Representative: **Calamita, Roberto**
**Dehns**
**St Bride's House**
**10 Salisbury Square**
**London**
**EC4Y 8JD (GB)**

(56) References cited:
**EP-A- 1 302 500** **EP-A- 1 389 632**
**WO-A1-03/104322** **JP-A- 08 269 317**
**JP-A- 2002 541 297** **JP-A- 2004 168 861**
**JP-A- 2005 126 542** **JP-B2- 2 990 646**

EP 1 834 990 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

TECHNICAL FIELD OF THE INVENTION

The present invention relates to a reactivity-having rubber composition before curing and to a sealing material for plasma treatment devices. More specifically, it relates to a reactive un-vulcanized rubber composition before curing, which composition can prepare sealing materials for plasma treatment devices at a low cost, particularly in semiconductor production processes, hardly has generation of tackiness or adhesion with counter faces even if it is continuously used at a high temperature for a long period of time and has no generation of particles, and also the present invention relates to sealing materials for plasma treatment devices, which materials are obtainable by vulcanization molding the composition.

TECHNICAL BACKGROUND OF THE INVENTION

In semiconductor production fields, a perfluoro elastomer (FFKM) has been conventionally used as an elastomer material having excellent plasma resistance.
The perfluoro elastomer, however, is very expensive. Therefore, a more inexpensive fluoro elastomer (FKM) has been frequently used in place of the perfluoro elastomer (FEKM).

However, the tendency of miniaturizing semiconductors has been enhanced recently so that in semiconductor production processes, a dry etching method such that etching treatment is carried out in a gas phase by plasma is mainly employed in fining processes of semiconductor members.
In the dry process, the environment of using a sealing member made of a fluoro elastomer (FKM), which is incorporated in semiconductor production devices, has been severe. The use of the sealing parts made of FKM has possibilities of affecting on semiconductor production processes such that sealing parts made of FKM are plasma-etched and thereby be deteriorated to cause lowering of sealing properties, or fillers blended in the sealing parts made of FKM are exposed and left out to cause generation of particles and thereby the number of maintenance is increased.

Furthermore, when fluoro elastomer (FKM) molded articles are continuously used in the semiconductor preparation field where plasma resistance and the like are desired, tackiness (adhesion) is generated on the surfaces of the fluoro elastomer molded articles and they occasionally adhere to mating materials. This phenomenon is easily induced in particularly semiconductor production processes at a high temperature. Consequently, for example, when the fluoro elastomer sealing material is used as a sealing material for an open close part such as a gate valve set on gates of various treatment devices used in various semiconductor production processes, rapid opening and closing of the gate valve are hindered to cause problems such that opening and closing of a gate valve are delayed or the sealing material is detached.

Conventionally, toward overcoming the above troubles, plasma resistance has been endowed on a resulting molded article by blending an expensive perfluoro elastomer (FFKM) or fluoro silicone rubber with a fluoro elastomer (FKM). The resulting molded article, however, has a problem such that the plasma resistance is not enhanced too much because in the molded article, the fluoro elastomer and perfluoro elastomer (FFKM) or fluoro silicone rubber are blended to form segments, so the fluoro elastomer part on the molded article surface is preferentially radical-decomposed.

In particular, a rubber material for plasma treatment devices, which is obtainable by vulcanization molding a blend of a fluoro elastomer and a high plasma resistant fluoro silicone rubber with a peroxide crosslinking agent, is disclosed in JP-A-2001-348462 (Patent Document 1). The rubber material has good tensile strength and elongation, but the fluoro silicone material used herein (KE and FE series) contains large amounts of fillers so that the fillers are etched with plasma to cause a problem of contaminating a semiconductor production process as particles. Furthermore, in order to improve the plasma resistance, about 30% by weight of a filler is added to prepare a rubber composition and the rubber composition is vulcanization molded using a peroxide crosslinking agent to prepare a rubber material for plasma resistant treatment devices. The rubber material also has a problem in that particles derived from the fillers are generated in the use for semiconductors.

JP-A-2003-183402 (Patent document 2) discloses a molded article obtainable by vulcanization molding a curable composition as described in JP-A-H11(1999)-116684 (Patent document 3) or JP-A-H11(1999)-116685 (Patent document 4) as it is. More specifically, JP-A-2003-183402 (Patent document 2) discloses a plasma resistant fluoro elastomer sealing material obtainable by crosslinking a fluoro elastomer, which has a bivalent perfluoro polyether or bivalent perfluoro alkylene structure in the main chain and has at least two alkenyl groups capable of addition reacting with a hydrosilyl group in the end or side chain, with a polymer having at least two hydrosilyl groups in the molecule and capable of addition reacting with the alkenyl groups described above. It discloses the sealing material has oxygen plasma resistance and no adhesion to quartz. It also discloses in the production of the sealing material, a raw material rubber, which is a fluoro elastomer represented by the formula (1)

$$CH_2 = CH - (X)_p - (R_f - Q)_a - R_f - (X)_p - CH = CH_2$$

(the definition thereof is omitted), a specific crosslinking polymer , a catalyst (peroxide type) and a co-crosslinking agent are kneaded in an open roll to prepare a compound and the compound is primary cured and secondary cured to prepare the molded articles (disclosed in Examples 1 to 5, and Comparative Examples 1 to 10).

However, in consequence of particular examination of the patent document 2, it discloses a conventional fluoro elastomer, a perfluoro elastomer, a silicone rubber or EPDM, but they are disclosed as a comparison and further Patent document 2 does not disclose a technique of improving adhesion or the like of a resulting molded article using the raw material rubber of the formula (1) at all.

The sealing material described in Patent document 2 has good properties at an original state (hardness, tensile, elongation and 100M) and compression set, but has inferior plasma resistance (radical resistance) and further, has a room for improving adhesion (referred to Comparative Example 2 in Table 1 of the present specification).

JP-A-2002-220486 (Patent document 5) discloses a fluoro elastomer molded article having a surface layer of a hydroxyl group modified silicone and having both of plasma resistance and no adhesion, which article is obtainable by allowing a hydroxyl group modified silicone having a specific hydroxyl group containing group to contact with a article prepared after contacting. It also discloses the silicone and the fluoro elastomer are bonded through a -R-O- group (provided that R is a hydrocarbon group directly bonded or indirectly bonded through another atom or group to the silicone main chain.

In the fluoro elastomer molded article disclosed in Patent document 5, the surface treatment of a base material is merely carried out and the treatment effect does not continue for a long period of time. The molded article has a problem in that the treated layer is decomposed by plasma and heat and thereby is taken away.

Therefore, an excellent sealing material having more excellent plasma resistance than that of the fluoro elastomer (FKM), which material is easily prepared at a lower coat as compared with the fluoro elastomer has been desired.

Patent document 1: JP-A-2001-348462
Patent document 2: JP-A-2003-183402
Patent document 3: JP-A-H11(1999)-116684
Patent document 4: JP-A-H11(1999)-116685
Patent document 5: JP-A-2002-220486

## DISCLOSURE OF THE INVENTION

## OBJECT TO BE SOLVED BY THE INVENTION

The present invention is intended to solve the problems associated with the above prior art, it is an object of the present invention to provide a reactivity-having vulcanizable rubber composition before curing, capable of preparing a sealing material for plasma treatment devices at a low cost, which material has properties such that even if it is continuously used at a high temperature for a long period of time in semiconductor production processes, tackiness or adhesion with counter faces is hardly generated and particle generation is not induced. It is another object of the invention to provide a sealing material for plasma treatment devices which material is obtainable by vulcanization molding the composition.

## MEANS FOR SOLVING THE OBJECT

The rubber composition of the present invention comprises:

(a) a crosslinkable fluoro elastomer,
(b) a reactive fluorine compound (excluding the crosslinkable fluoro elastomer (a)) having a bivalent perfluoropolyether structure or a bivalent perfluoroalkylene structure and, in the end or the side chain, at least two alkenyl groups capable of addition reacting with a hydrosilyl group in the following organosilicon compound (c),
(c) a reactive organosilicon compound having at least two hydrosilyl groups in the molecule and capable of addition reacting with an alkenyl group in the reactive fluorine compound (b) wherein the total amount of the compounds (b) and (c) is from 1 to 10 parts by weight based on 100 parts by weight of the crosslinkable fluoro elastomer, and further comprises
(d) a vulcanizing agent (d-1), and optionally a co-crosslinking agent (d-2).

In the present invention, the reactive fluorine compound (b) and the reactive organosilicon compound (c) need to be liquid compounds and be able to gel by reaction in the presence of a catalyst.

In the present invention, the crosslinkable fluoro elastomer (a) comprises (i) a fluorovinylidene type crosslinkable fluoro elastomer (FKM) singly, or comprises (ii) the crosslinkable FKM and a small amount of a crosslinkable perfluoro elastomer

(FFKM).

In the rubber composition according to the present invention, it is preferred that the total amount of the reactive fluorine compound (b) and the reactive organosilicon compound (c) be 1 to 10 parts by weight, the amount of the vulcanizing agent (d-1) be 0.5 to 2.5 parts by weight and the amount of the co-crosslinking agent (d-2) be 3 to 6 parts by weight based on 100 parts by weight of the crosslinkable fluoro elastomer (a).

The sealing material for plasma treatment devices according to the present invention is obtainable by primary vulcanization molding any one of the above un-vulcanized rubber compositions and then subjecting to secondary vulcanization at a temperature of from 150 to 300°C, preferably 200 to 280°C at atmospheric pressure or under reduced pressure (for example,

at a degree of vacuum of 0.01 to 500 Pa), preferably by a vacuum oven (at the same degree of vacuum as above).

EFFECT OF THE INVENTION

The present invention provides a vulcanizable rubber composition capable of preparing a sealing material for plasma treatment devices at a low cost which material has more excellent plasma resistance as compared with conventional fluoro elastomer (FKM), and properties such that even if it is continuously used at high temperatures for a long time period of time in semiconductor production processes, stickiness and adhesion to mating materials are hardly generated and generation of particles is not induced.

According to the present invention, the composition is primary vulcanization molded and then subjected to secondary vulcanization at a temperature of from 150 to 300°C, preferably 200 to 280°C at atmospheric pressure or under reduced pressure, preferably in a vacuum oven, to prepare a sealing material having the various properties for plasma treatment devices.

After the primary vulcanization molding of the rubber composition, when the secondary vulcanization is carried out under the above conditions, particularly under the preferable conditions, the reactions can be performed almost perfectly. In result, the amount of unreacted components is very small and even if the rubber composition is used for sealing materials for plasma treatment devices, the sealing materials have no generation of particles, are free from stickiness or adhesion to counter faces and have excellent balance in properties such as plasma resistance.

Furthermore, the vulcanization molded articles represented by the sealing materials for plasma treatment devices according to the present invention have excellent no adhesion to counter faces and good mold releasing properties. Therefore, they can prepare sealing materials for plasma treatment devices efficiently and safely by hot press at a low coat.

BRIEF DESCRIPTION OF DRAWING

Figure 1 is an illustrative view of showing a jig for adhesion test wherein O-rings are mounted on a flange and a test method.

Fig. 2 is a schematic view of showing a particle test device for measuring the particle amount by mounting O-rings on a flange.

Explanation for numeral

20 Particle test device
21 Particle counter
22 Filter
23 Head
24 Bellows
25 Driving device
26 Simulation chamber
5 27 Seal mounting member

BEST MODE FOR CARRYING OUT THE INVENTION

The rubber composition of the present invention, the sealing materials for plasma treatment devices obtainable by 10 vulcanization molding the composition and the preparation process thereof are described in detail below.

Rubber composition

The rubber composition of the present invention is a reactive vulcanizable rubber composition before curing and 15 comprises a crosslinkable fluororesin (a) , a specific reactive fluorine compound (b), a specific reactive organosilicon compound (c), a vulcanizing agent (d-1) and optionally a co-crosslinking agent (d-2).
20 Hereinafter, each of the components contained in the un-vulcanized rubber composition is described firstly.

Crosslinkable fluoro elastomer (a)

Relating the object of the present invention, the crosslinkable fluoro elastomer (a) is desirably a rubber material capable of preparing sealing materials having resistance to plasma used for various kinds of semiconductor dry processes (plasma etching treatment) and as the base rubber material (a), public known fluoro elastomers having excellent plasma resistance are generally used.
As the crosslinkable fluoro elastomer (a) in the present invention,

(i) a vinylidene fluoride type crosslinkable fluoro elastomer (FKM) may be used singly or
(ii) a crosslinkable perfluoro elastomer (FFKM) may be used together with the crosslinkable FKM.

As the crosslinkable fluoro elastomer (a), it is possible to use, for example, those as described in Table 1 on page 64 "Development of fluorine materials" (published by CMC Co., in 1997 edited by Yamabe and Matsuo). Specific examples thereof are:

(1) general vinylidene fluoride fluoro elastomer (FKM) in which there is hydrogen directly bonded to a part of carbons (C) constituting a main chain carbon (C)-carbon (C) bond and thereby there is a main chain carbon (C) -hydrogen (H) bond such as binary vinylidene fluoride (VDF)/hexafluoropropylene (HFP) copolymer (FKM) or tetrafluoro ethylene (TFE)/propylene rubber, and ternary vinylidene fluoride (VDF)/ hexafluoropropylene (HFP)/tetrafluoroethylene (TFE) copolymer rubber, tetrafluoro ethylene (TFE)/ propylene/vinylidene fluoride (VDF) copolymer rubber or vinylidene fluoride (VDF)/ tetrafluoride ethylene (TFE)/perfluoromethylvinylether copolymer rubber;
(2) FFKM in which all of hydrogen atoms directly bonded to carbons (C) constituting a main chain carbon (C)-carbon (C) bond are substituted with fluorine atoms (F) and thereby there is no main chain carbon (C) -hydrogen (H), such as tetra fluoro ethylene (TFE)/perfluoroalkyl (alkyl group having preferably C1 to C3, particularly C1) vinylether copolymer rubber (FFKM) and tetrafluoride ethylene (TFE)/perfluoroalkylvinylether copolymer rubber; and
(3) a fluorine type thermoplastic elastomer capable of extrusion molding.

Of these crosslinkable fluoro elastomers (a), it is possible to use, as the crosslinkable FKM, any one of commercially available VITON (DuPont Co., Ltd.), DAI-ELG902, G912 (Daikin Industries Ltd.), MIRAFLON (Asahi Kasei Co., Ltd.), FLUOREL (3M Co., Ltd.) and TECNOFLON (Solvay Solexis Inc.).
In the present invention, crosslinkable fluoro elastomers, which comprise more inexpensive FKM singly or comprise FKM as an essential component and a small amount of FFKM are used essentially as the base rubber (a). From the viewpoint of plasma resistance, the use of the crosslinkable FFKM can prepare most excellent sealing materials at a high cost. Accordingly, in the present invention, the FKM, which is inexpensive and universally applicable, is used as a base component, and its plasma resistance and adhesion are improved so as to prepare a sealing rubber material having sufficient durability for use as semiconductor sealing materials at a low cost.
In the present invention, from the viewpoint of remarkably improving the plasma resistance of the FKM (referred to Example 5), the crosslinkable perfluoro elastomer (FFKM) in which hydrogen atoms directly bonded to main chain carbon atoms are completely substituted with fluorine atoms or the crosslinkable fluorine thermoplastic elastomer may be mixed in a small amount (for example, respectively not more than 20 parts by weight, preferably about 10 to 1 parts by weight based on 100 parts by weight of the crosslinkable FKM) within the limit of not missing the effect of the present invention.

Reactive fluorine compound (b)

As the reactive fluorine compound (b), a reactive fluorine compound having a bivalent perfluoropolyether structure or a bivalent perfluoroalkylene structure, and having, in the end or the side chain, at least two alkenyl groups capable of addition reaction with a hydrosilyl group (≡Si-H) of the organosilicon compound (c) is used. The bivalent perfluoropolyether structure or the bivalent perfluoroalkylene structure contributes to a curing reaction.
As the reactive fluorine compound (b), it is possible to use those similar to a fluorine elastomer described on paragraphs [0016] to [0022] in JP-A-2003-183402 (Patent Document 2) and a perfluoro compound described JP-A-11(1999)-116684 (Patent document 3) or on paragraphs [0006] to [0014] in JP-A-11 (1999) -116685 (Patent Document 4) .

The reactive fluorine compound (b) is specifically represented by the following formula (1) as described in JP-A-2003-183402 (Patent Document 2).

$$CH_2 = CH - (X)_p (R_f - Q)_a - R_f - (X)_p - CH = CH_2 \qquad (1)$$

In the formula (1), Xs are independently $-CH_2-$, $-CH_2O-$, $-CH_2OCH_2-$, $-Y-NR^1SO_2-$ or $-YNR^1-CO-$ wherein Y is $-CH_2-$ or $-Si(CH_3)_2-Ph-$ (Ph: phenylene group), $R^1$ is hydrogen or a substituted or unsubstituted univalent hydrocarbon group, $R_f$ is a bivalent perfluoroalkylene group or bivalent perfluoropolyether group, p is independently 0 or 1, a is an integer of 0 or more. Q is represented by the formula (2), (3) or (4).

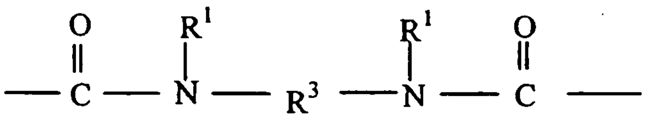

·· (2)

$$- (X)_p - CH_2CH_2R^4CH_2CH_2 - (X)_p - \qquad (3)$$

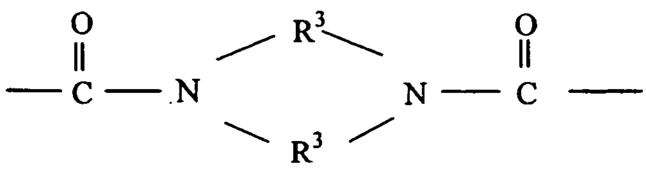

·· (4)

In the formulas (2) to (4), X, p and $R^1$ are the same as above, $R^3$ is a substituted or unsubstituted bivalent hydrocarbon group. $R^4$ is a substituted or unsubstituted bivalent hydrocarbon group wherein at least one or two or more of oxygen atom, nitrogen atom, silicon atom and sulfur atom are present in the bonding, or a functional group represented by the following formula (5) or (6).

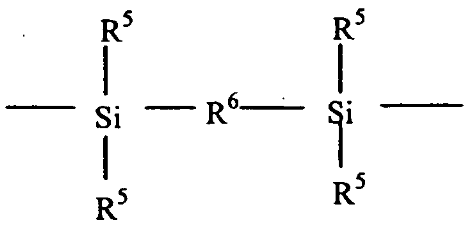

··· (5)

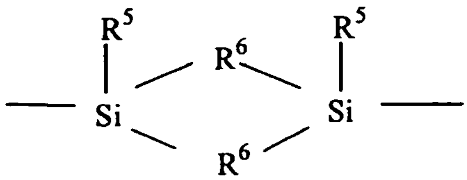

··· (6)

In the formulas (5) and (6), $R^5$ is a substituted or unsubstituted univalent hydrocarbon group and $R^6$ is a group containing at least one or two or more of carbon atom, oxygen atom, nitrogen atom, silicon atom and sulfur atom in the main chain structure.

Commercially available examples of the reactive fluorine compound (b) may include "SIFEL" (manufactured by Shin-Etsu Chemical Co., Ltd).

Reactive organosilicon compound (c)

The reactive organosilicon compound (c) used herein is a compound having at least two hydrosilyl groups (=Si-H) in the molecule and capable of addition reaction with an alkenyl group of the reactive fluorine compound (b).

Preferable examples of the reactive organosilicon compound (c) may include a crosslinking polymer as described in paragraphs [0023] to [0027] of JP-A-2003-183402 (Patent Document 2) and organosilicon compounds as described in JP-A-H11(1999)-116684 (Patent document 3) or in paragraphs [0021] to [0035] of JP-A-H11(1999)-116685 (Patent document 4).

The reactive fluorine compound (b) has at least two hydrosilyl groups in the molecule and is crosslinked by the reactive organosilicon compound (c) capable of addition reaction with an alkenyl group (crosslinking polymer). Examples of the reactive organosilicon compound (c) are organohydrogen polysiloxanes having two hydrosilyl groups, preferably three or more hydrosilyl groups.

Examples of the organohydrogen polysiloxane may include organohydrogen polysiloxanes conventionally used in addition reaction-curable silicon rubber compositions, and preferably the following compounds represented by the formulas (7) and (8).

$$Z - CH_2CH_2 - (X)_p - Rf - (X)_p - CH_2CH_2 - Z \qquad (7)$$

$$Rf - (X)_p - CH_2CH_2 - Z \qquad (8)$$

In the formulas (7) and (8), X, p and $R_f$ are the same as above. Z is represented by the following formula (9) or (10).

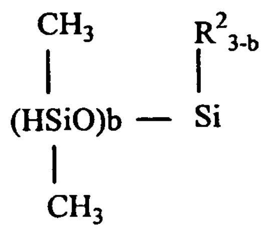

··· (9)

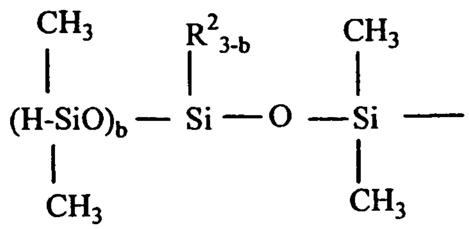

··· (10)

$R^2$ is a substituted or unsubstituted univalent hydrocarbon group, and b is 1, 2 or 3 in Z of the compound (9) and b is 2 or 3 in Z of the compound (10).

$R^2$ is preferably an univalent hydrocarbon group having 1 to 8 carbon atoms and specific examples thereof are alkyl groups such as methyl, ethyl, propyl, isopropyl, butyl, isobutyl, tert-butyl, pentyl, neopentyl, hexyl, heptyl and octyl; cycloalkyl groups such as cyclopentyl, cyclohexyl and cycloheptyl; aryl groups such as phenyl, tolyl and xylyl; aralkyl groups such as benzyl and phenylethyl; and those obtainable by substituting a part or all of hydrogen atoms in these groups with halogen atoms e.g. fluorine, chlorine or bromine, such as chloromethyl group, bromoethyl group, chloropropyl group, trifluoropropyl group and 3,3,4,4,5,5,6,6,6-nonafluorohexyl group.

A commercially available example of the reactive organosilicon compound (c) may include "SIFEL crosslinking agent CP-2" manufactured by Shin-Etsu Chemical Co., Ltd.

Catalyst for gel curing reaction of reactive fluorine compound (b) with reactive organosilicon compound (c)

In the present invention, the reactive fluorine compound (b) and the reactive organosilicon compound (c) are reacted in the presence of a catalyst to be gelled. As the catalyst for the gelation reaction, it is preferred to use a platinum compound.

It is possible to use, as the catalyst for gelation reaction, an addition reaction catalyst such as a platinum metal compound as described in paragraph [0028] of JP-A-20003-183402 (Patent Document 2) and a platinum metal catalyst as described in JP-A-H11 (1999)-116684 (Patent Document 3) or in paragraph [0036] of JP-A-H11(1999)-116685 (Patent Document 4).

Non-limiting examples of the platinum compound catalyst for the gelation reaction of the components (b) and (c) are platinum chloride, a complex of platinum chloride with an olefin such as ethylene, a complex of platinum chloride with alcohol or vinyl siloxane and platinum/silica, alumina or carbon.

Examples of the platinum metal compounds other than the platinum compounds are rhodium, ruthenium, iridium and palladium compounds.

The amounts of these catalysts used are not particularly limited. When they are used in a catalytic amount, a desired curing rate can be obtained. From an economical standpoint or for preparing good cured products, the catalyst amount (in terms of platinum metal) is preferably 0.1 to 1000 ppm, more preferably about 0.1 to 500 ppm based on the total amount of the reactive fluorine compound (b) (component (b)) and the reactive organosilicon compound (c) (component (c)).

An example of the catalyst for gelation reaction of the reactive fluorine compound (b) and the reactive organosilicon compound (c) which catalyst is contained in the reactive fluorine compound (b) or the reactive organosilicon compound (c) is "SIFEL POTTING GEL (SIFEL8070A/B)" manufactured by Shin-Etsu Chemical Co., Ltd.

It is presumed the reactive fluorine compound (b) and the reactive organosilicon compound (c) are reacted with heating in the presence of a catalyst for gel curing reaction such as platinum metal compound, to prepare a gelled product (gelatinous cured product) (bc), by the following gelation reaction mechanism that an addition reaction is caused in the presence of a platinum catalyst of a hydrosilyl group and alkenyl group.

In the present invention, the SIFEL POTTING GEL (SIFEL8070A/B) manufactured by Shin-Etsu Chemical Co., Ltd. preferably used as the components (b) and (c) contains the reactive fluorine compound (b), the reactive organosilicon compound (c) and the catalyst for gelation reaction. Therefore, the SIFEL POTTING GEL (SIFEL8070A/B) before curing, namely the components (A) and (B) and the catalyst in the SIFEL before curing (before gelation) is blended with the crosslinkable fluorine rubber (a) (e. g. FKM) used in the present invention, and further the vulcanization agent (d-1) and optionally the co-crosslinking agent (d-2), and then molded into a desired shape. Thereafter, the resulting molded article is vulcanization molded so that the fluorine rubber components are crosslinked and also addition reaction of the components (A) and (B) constituting the SIFEL 8070A/B is forwarded to gel (cure) the article and thereby a molded article is prepared.

Vulcanization agent (d-1) and Co-crosslinking agent (d-2)

The unvulcanized rubber composition of the present invention comprises, as the crosslinking component (d), generally the vulcanization agent (d-1) and optionally the co-crosslinking agent (d-2), preferably both of the vulcanization agent and the co-crosslinking agent.

As the vulcanizing agent (d-1) and the co-crosslinking agent (d-2), conventionally known agents can be widely employed. The vulcanizing agent (d-1) is variously selected in accordance with the kind of the crosslinkable fluorine rubber (a) in the un-vulcanized rubber composition. Preferable examples of the vulcanization method for FKM are polyamine vulcanization, polyol vulcanization, peroxide vulcanization (peroxide vulcanization) and triazine vulcanization, and peroxide vulcanization is more preferable among them. The peroxide vulcanization has no fear that particles are not produced during the use of the resulting sealing material because it is unnecessary to mix the un-vulcanized rubber composition with an acid receiving agent which is a particle generating source, such as magnesium oxide and calcium hydroxide.

In the peroxide vulcanization, it is preferred to use the peroxide crosslinking agent as described in the paragraph [0018] of JP-A-2003-155382 filed by the present applicant. As the co-crosslinking agent (d-2), it is possible to use the crosslinking assistant used for peroxide crosslinking as described in the paragraph [0019] of the above publication.

Examples of the peroxide crosslinking agent used as the vulcanization agent (d-1) may include 2,5-dimethyl-2,5-di(t-butylperoxy)hexane (PERHEXA 25B manufactured by NOF CORPORATION), dicumylperoxide (PERCUMYL D manufactured by NOF CORPORATION), 2,4-dichlorobenzoyl peroxide, di-t-butylperoxide, t-butyldicumylperoxide (PERCUMYL D manufactured by NOF CORPORATION), benzoylperoxide, 2,5-dimethyl-2,5di(t-butylperoxide)hexyne-3 (PERHEXYNE 25B manufactured by NOF CORPORATION), 2,5-dimethyl-2,5di(benzoylperoxy)hexane, α,α'-bis(t-butylperoxy-m-isopropyl)benzene, (PERBUTYL P manufactured by NOF CORPORATION), α,α'-bis(t-butylperoxy-m-isopropyl)benzene, t-butylperoxyisopropyl carbonate, parachlorobenzoyl peroxide and t-butylperbenzoate.

Of these, 2, 4-dichlorobenzoyl peroxide, dicumylperoxide (PERCUMYL D manufactured by NOF CORPORATION), benzoyl peroxide (NYPER B manufactured by NOF CORPORATION), α,α'-bis(t-butyl peroxy-m-isopropyl)benzene (PERBUTYL P manufactured by NOF CORPORATION) are preferably used. These crosslinking agents can be used singly or in combination with two or more.

Although the peroxide crosslinking agent may be singly used as the above vulcanization agent in the present invention, it is possible to optionally use the co-crosslinking agent (d-2) (sometimes referred to the crosslinking assistant for peroxide crosslinking) together with the peroxide crosslinking agent (d-1).

Examples of the co-crosslinking agent (d-2) may include compounds capable of radical co-crosslinking such as triallyl isocyanurate (TAIC manufactured by Nippon Kasei Chemical Co., Ltd.), triallyl cyanurate (TAC), triallyl trimerytate, N, N'-m-phenylene bismaleimide, dipropagyl terephthalate, diallylphthalate, tetra-allyl terephthal amide, ethylene glycol/ dimethacrylate (San-Ester EG manufactured by Sanshin Chemical Industry), trimethyol propane trimethacrylate (San-Ester TMP manufactured by Sanshin Chemical Industry), polyfunctional methacrylate monomer (Hicross M manufactured by Seiko Chemical Co., Ltd.), polyvalent alcohol methacrylate and acrylate, and a metal salt of methacrylic acid. These co-crosslinking agents can be used singly or in combination with two or more.

Of these co-crosslinking agents, preferred is triallyl isocyanurate having excellent reactivity and capable of improving the heat resistance of a resulting sealing material.

<u>Compounding composition</u>

The rubber composition of the present invention preferably comprises, based on 100 parts by weight of the crosslinkable fluorine rubber (solid component)(a), the reactive fluorine compound (b) and the reactive organosilicon compound (c) in a total amount of usually from 1 to 10 parts by weight, preferably 2 to 6 parts by weight, the vulcanizing agent (crosslinking agent) (d-1) in an amount of usually 0.5 to 2.5 parts by weight, preferably 0.5 to 2.0 parts by weight, and optionally the co-crosslinking agent (d-2) in an amount of usually 3 to 6 parts by weight, preferably 4 to 6 parts by weight.

When the total amount ((b) + (c) ) of the reactive fluorine compound (b) and the reactive organosilicon compound (c) is less than the above amount range, a resulting sealing material has a tendency that the improvement on plasma resistance is not confirmed. When the amount is over the above amount range, it has a tendency that kneading operation thereof is very difficult.

When the amount of the vulcanizing agent (crosslinking agent) (d-1) is less than the above amount range, the crosslinking reaction tends to be insufficient. When the amount is over the above amount range, the reaction proceeds too fast to cause a tendency that it is difficult to prepare a complete and desirable molded article.

When the amount of the co-crosslinking agent (d-2) is less than the above amount range, the crosslinking tends to be insufficient. When the amount is over the above amount range, the crosslinking density is too high and has an inverse influence on the properties such as elongation, in using a resulting sealing material as a sealing material for plasma treatment devices, and further the sealing material tends to have breakage at a high temperature or in compression.

The reactive fluorine compound (b) and the reactive organosilicon compound (c) are usually used in the almost same amount (weight ratio), but they may be used in a weight ratio of (b)>(c).

The above un-vulcanized rubber composition may comprise an acid receiving agent and a filler if necessary.

<u>Acid-receiving agent</u>

The acid-receiving agent is preferably used in polyamine vulcanization and polyol vulcanization. Examples of the acid-receiving agent are magnesium oxide and calcium hydroxide. When the acid-receiving agent is contained in the composition, particles are liable to be caused during the use of a resulting sealing material. Therefore, it is desired that the sealing material do not contain the filler, which generates particles, all. In the present invention, it is desired to employ peroxide vulcanization, which is a vulcanization method without the use of the acid-receiving agent.

<u>Filler</u>

In the present invention, it is desired that the filler be not used as possible. However, the various organic or inorganic fillers can be used in accordance with the necessity, for example, in order to improve the properties, within the limit of not missing the object and effect of the present invention.

Examples of the inorganic fillers are carbon black, silica, barium sulfate, titanium oxide and aluminum oxide. Examples of the organic fillers are polytetrafluoroethylene resin, polyethylene resin and polyimide resin.

These organic and inorganic fillers may be used singly or in combination with two or more.

In the present invention, usable fillers are not limited on these fillers.
Of these fillers, the polytetrafluoroethylene resin is preferable. The sealing material containing the polytetrafluoroethylene resin as a filler has a merit such that generation of particles from a sealing material can be prevented to the utmost and even if the rubber components of the sealing material are etched, particles, which have an inverse influence on the semiconductor preparation processes, are relatively hardly generated.

Preparation of un-vulcanized rubber composition

In the preparation process of the rubber composition according to the present invention, the reactive fluorine compound (b), the reactive organosilicon compound (c), the crosslinkable fluoro elastomer (a), the vulcanizing agent (d-1) and optionally the co-crosslinking agent (d-2) are mixed with addition in the above amounts to prepare the un-vulcanized rubber composition. The addition order of these components (a) to (d) is arbitrary and is not particularly limited.
The catalyst for addition reaction of the reactive fluorine compound (b) and the reactive organosilicon compound (c), for example, platinum catalyst, is added and mixed into the blend of the components (a) to (d) by a method of previously adding the addition reaction catalyst into any one of the reactive fluorine compound (b) and the reactive organosilicon compound (c) in kneading the reactive fluorine compound (b), the reactive organosilicon compound (c) and the crosslinkable fluorine rubber (a).
As described later, the reactive fluorine compound (b) and the reactive organosilicon compound (c) used in the present invention are in a liquid state having fluidity. In fact, the catalyst is used in the following manner that the component (b) and the component (c) are packed separately and the platinum catalyst which is one kind of the catalysts for addition reaction accelerating of the components (b) and (c) is previously added and mixed in the component (b) or (c). An example thereof is SIFEL POTTING GEL (SIFEL 8070A/B) manufactured by Shin-Etsu Chemical Co., Ltd. These blending components are kneaded using a kneader such as open roll mixer by a conventionally known method to prepare the un-vulcanized rubber composition.

Sealing material for plasma treatment devices

The sealing material for plasma treatment devices according to the present invention is obtainable by vulcanization molding any one of the above un-vulcanized rubber compositions in a prescribed mold.
According to the vulcanization molding, the resulting vulcanization molded articles such as sealing materials have excellent plasma resistance and non-adhesion properties. Therefore, it is possible to prepare sealing materials used for a plasma treatment process in semiconductor preparation processes, particularly, excellent sealing materials for driving parts including gate valves used in opening parts of plasma treatment chamber units.
In the hot press molding, an un-vulcanized rubber composition (rubber compound) is filled in a mold and heated under a pressure, for example, at a mold pressure of 1 to 250 kgf/cm$^2$, at a temperature of from 150 to 180°C for about 5 to 20 min to perform vulcanization (primary vulcanization), similar to conventional rubber vulcanization.
Successively, in order to react components (components (b) and (c)) remained as an un-reacted product in the primary vulcanization completely, the composition is heated using any one of various ovens at an ordinary pressure or under reduced pressure, preferably using a vacuum oven at a temperature of from 150 to 300°C, preferably 200 to 280°C for 1 to 24 hours to perform secondary vulcanization. In the secondary vulcanization at a relatively lower temperature, for example, a temperature of not lower than 150°C and lower than 200°C, the reaction of un-reacted components cannot be completed sufficiently and thereby a very slight amount of un-reacted components is occasionally remained.
In results, the un-reacted components are liberated as particles or a liberated gas from sealing materials in semiconductor preparation processes and thereby the semiconductor preparation processes are occasionally contaminated. In such cases, secondary vulcanization is carried out at a high temperature, for example, not lower than 200°C and not higher than 300°C, preferably not lower than 200°C and not higher than 280°C, and thereby various reactions can be completed. As a result, un-reacted components are not present. Therefore, it is preferred to carry out the secondary vulcanization. As an oven used for the secondary vulcanization, a vacuum oven is preferable or the vulcanization may be carried out in the combined use of the vacuum oven with an oven of another method.
As described above, the vulcanized products of the curable composition according to the present invention can prepare vulcanized molded articles such as sealing materials having excellent plasma resistance, non-adhesion and low particle properties (low dust generating properties).
In the present invention, examples of a material containing the components (b) and (c) may include "SIFEL8070A/B" (manufactured by Shin-Etsu Chemical Co., Ltd.) and "SIFEL3701A/B" for LIM molding. It is necessary to use these liquid materials having fluidity. The rubber composition is prepared by blending the components (b) and (c) in a liquid state with the rubber component (a) and then vulcanization molded to form a rubber elastic article (sealing material).
Although the accurate reason is not known, it can be presumed that an excellent blend condition with the fluoro elastomer (a) can be realized by blending these excellent fluidity-having components in a liquid state (in an oily state)

with the fluoro elastomer and thereby the sealing materials having particularly excellent plasma resistance and non-adhesion can be prepared.
More specifically, it is considered that in blending between general fluoro elastomers, dispersion of both of the components are not performed completely and they mostly become in a certain phase structure (sea-island structure) and, therefore, deterioration selectively proceeds from parts weak in plasma in rubber polymers.

Meanwhile, in the blend of the components (b) and (c) having fluidity with the fluoro elastomer (a) used in the present invention, the kneading is carried out sufficiently. The present inventors presume that the sufficient kneading is performed due to the formation of such a structure that the weak region of the fluorine rubber is protected by perfluoropolyether having plasma resistance or perfluoroalkylene parts in the component (b).

The invention as described in the patent document 2 is similar to the present invention in the point of the use of "SIFEL" manufactured by Shin-Etsu Chemical Co., Ltd. The "SIFEL" used in the document 2 comprises "SIFEL5701 which is a material for mold forming (solid compound type) and "SIFEL3701" which is a material for LIM molding. They are any of commercially available materials for rubber elastic article molding and they are used, as they are, to prepare a sealing material. Therefore, this patent is largely different from the present invention.

In particular, "SIFEL8070A/B" used as a component for the components (b) and (c) in the present invention is intrinsically a material for gel forming (the component (a) is not blended). Even if the "SIFEL8070A/B" is used singly and molded by a proper method, it becomes a gel body. The present invention is characterized in that "SIFEL8070A/B is blended to the rubber blend containing the components (a) and (d), and vulcanization molded, to form a rubber elastic sealing material.

In the semiconductor field, it is known that the generation of particles exerts bad influence on the semiconductor preparation. Therefore, a sealing material having plasma resistance and also the low generation of particles even if it undergoes plasma deterioration has been demanded. In order to decrease the generation of particles caused by plasma deterioration from a sealing material, it is necessary to prepare a sealing material not containing a filler, which is considered to be a source of the generation of particles from the sealing material. The use of "SIFEL POTTING GEL (SIFEL8070A/B)" is most desirable. In a material for LIM forming (SIFEL370A/B), a filler has been blended previously. Since SIFEL8070A/B is a material for gel forming and dose not contain a filler, it can respond to such a requirement. Furthermore, SIFEL8070A/B has more excellent fluidity because of containing no filler and further it is more desirable from the viewpoint of blend dispersibility.

The present invention, further, has a proper problem that the components (b) and (c) are not completely gelled only by vulcanization molding and thereby are occasionally remained as an un-reacted component. Furthermore, when they are used in this state under plasma conditions at a high temperature, they are liable to cause gas liberation.

In order to solve the problem, the secondary vulcanization is carried out by a vacuum oven at a temperature of from 150 to 300°C, more preferably 200 to 280°C for 1 to 24 hr, more preferably 3 to 24 hr after the primary vulcanization molding in the present invention. The secondary vulcanization can decompose and evaporate un-reacted components to prepare a sealing material having low generation of a liberated gas.

The vulcanized molded articles, which are typified by the sealing materials for plasma treatment devices according to the present invention, have remarkably improved plasma resistance and non-adhesion as compared with conventional ones. Therefore, they are unnecessary to contain a filler (the filler content in a composition or a vulcanization molded article: 0 % by weight) and further even if they contain a filler, the filler content can be depressed to be very slight amounts (for example about 1.0 to 10.0 % by weight). Thus, the vulcanized molded articles have excellent effect that particles are not generated even if they are used as a sealing material for plasma treatment devices. Additionally, the gelation reaction is completely carried out in the secondary vulcanization using a vacuum oven and thereby un-reacted components are substantially vaporized. Therefore, contamination caused by a liberated gas in semiconductor preparation devices can be decreased. Furthermore, the sealing materials are inexpensive similar to fluoro elastomers (FKM).

## Example

The preferred embodiments of the present invention will be described in more detail with reference to the following examples below, but the present invention should not be limited by the examples.

## Measurement conditions

<Physical properties in an original statue>

The physical properties in an original state such as hardness, tensile strength, elongation and 100% modulus were measured in accordance with JIS K6251 and K6253.

<Compression set (%)>

The measurement was carried out at 200°C for 70 hours at a compressibility of 25% in accordance with JIS-K6262.

<Adhesion test (N)>

An O-ring having a size of AS568A-330 (wire diameter: 5.33±0.12mm, inner diameter: 53.34+0.45 mm) was prepared using an O-ring moldable mold. The O-ring was mounted on flanges as shown in Figure 1 and the flanges were bolted to be touched each other metallically. Thereafter, it was heated at a certain test temperature of 180°C for 72 hours in an electric furnace. After the elapse of 72 hours, the flange was taken out from the electric furnace and left for cooling until the temperature thereof became to room temperature (25°C). Then, bolts were detached and the flange was torn off at a rate of 300 mm/min. The value obtained by subtracting the force under flange's own weight from the maximum value of the force at the tearing was taken as an adhesion.

<Plasma resistance>

As described in the publication of JP-A-2004-134665, a sealing material was set in the following way. Using a parallel flat low-temperature plasma irradiation apparatus (electrode diameter: ϕ300 mm, distance of electrodes: 50 mm), an earth side electrode and a plasma source were placed so that they were facing each other. On the earth side electrode, a sealing material was placed as a specimen, and the plasma source side surface of the specimen was shielded by a punching metal and further the surface was shielded by a steel wool so that the sealing material was unaffected by ions due to plasma irradiation and it was affected only by radicals.
Subsequently, a plasma irradiation test was carried out at an output RF of 500W for a plasma irradiation time of 3 hours, in a gas mixing ratio $O_2/CF_4$ of 180/20 (cc/min, flow rate (volume ratio)), at a gas total amount of 150 sccm and at a degree of vacuum of 80 Pa.
After and before the test, the weight (mass) of the sealing material was measured. The mass before the test was taken as x (g) and the mass after the test was taken as y (g) and then the mass loss rate was calculated by the following formula.
The sealing material has more excellent plasma resistance with decreasing the mass loss rate (%).

$$\text{Mass loss rate (\%)} = [(x-y)/x] \times 100$$

Example 1

To a crosslinkable fluoro elastomer "DaielG912" which is a ternary fluorine copolymer capable of subjecting to peroxide vulcanization and comprises vinylidene fluoride ($CF_2=CH_2$), hexafluoropropylene ($CF_3-CF=CF_2$) and tetrafluoroethylene ($CF_2=CF_2$) and has a fluorine content of 71 % by mass and a Mooney viscosity $ML_{1+10}$ (100°C) of 76, manufactured by Daikin Kogyo Co., Ltd, a reactive fluorine compound (b) having a bivalent perfluoropolyether structure or a bivalent perfluoroalkylene structure and at least two alkenyl groups capable of addition reacting with a hydrosilyl group at the end or the side chain, a reactive organosilicon compound (c) having at least two hydrosilyl groups in the molecule and capable of addition reacting with an alkenyl group, "SIFEL8070A/B" manufactured by Shin-Etsu Chemical Co., Ltd., which contains a platinum compound catalyst used for addition reaction of the components (b) and (c) and which can be gelled by the reaction with the components (b) and (c), a crosslinking agent "Perhexa25B" manufactured by NOF Co., Ltd., 2,5-dimethyl-2,5-di(t-butylperoxy)hexane and a co-crosslinking agent "TAIC" triallyl isocyanurate manufactured by Nippon Kasei Co., Ltd., were added (blended).
They were kneaded using an open roll at 60°C for 1.0 hour to prepare a rubber compound.
The rubber compound was filled in a mold and crosslinking molding was carried out by heating at 165°C for 15 minutes with application of a pressure of 50 $kgf/cm^2$ (primary vulcanization molding).
Next, the primary vulcanized molded article was taken out from the mold and heated by a vacuum oven (degree of vacuum: 30Pa) under reduced pressure at 200°C for 12 hours (secondary vulcanization).
Regarding the resulting molded article, the physical properties in an original state, compression permanent set (%), adhesion test (N) and plasma resistance (weight loss rate (%) under a condition of shielding for 3 hours) as shown in Table 1 were measured under the above test conditions.
The results are shown in Fig. 1.

Examples 2 to 5

In each example, the procedure of Example 1 was repeated except that the blend composition and the like are changed as shown in Table 1 to prepare a molded article.

Regarding to the resulting molded article, the physical properties in an original state, compression permanent set (%), adhesion test (N) and plasma resistance (weight loss rate (%) under a condition of shielding for 3 hours) as shown in Table 1 were measured under the above test conditions.

The results are shown in Fig. 1.

Example 6

The procedure in the primary and secondary vulcanization molding according to Example 1 was repeated except that the secondary vulcanization conditions at 200°C for 12 hours are changed to the conditions at 180°C for 12 hours as shown in Table 1 to prepare a molded article.

Regarding to the resulting molded article, the physical properties in an original state, compression permanent set (%), adhesion test (N) and plasma resistance were measured under the above test conditions.

The results are shown in Fig. 1.

In Example 6, as shown in Table 1, un-reacted components were present, but the amount thereof was very slight. The basic physical properties in an original state, compression permanent set (%), adhesion and plasma resistance were good without problems. When the present sealing material is fitted on places other than a chamber and neighbors in wafer treatment such as piping and the like, it can be used entirely without problems. In Example 6, the present of the un-reacted components was a very slight amount and thereby the resulting sealing material can be sufficiently used in a chamber and neighbors thereof.

Comparative Example 1

The procedure of Example 1 was repeated except that "SIFEL8070A/B" manufactured by Shin-Etsu Chemical Co., Ltd. was not blended as shown in the blend composition of Table 1 to prepare a molded article.

Regarding to the resulting molded article, the physical properties in an original state, compression permanent set (%), adhesion test (N) and plasma resistance as shown in Table 1 were measured under the above test conditions.

The results are shown in Fig. 1.

Comparative Example 2

The procedure of Example 1 was repeated except that SIFEL3701A/B" containing a special crosslinking agent and filler, which are not a peroxide, manufactured by Shin-Etsu Chemical Co., Ltd. was used in accordance with its use method as shown in the blend composition of Table 1, to prepare a molded article by LIM molding.

The comparative example 2 corresponds to Example 4 in JP-A-2003-183402 (Patent Document 2) (rim molding type "SIFEL").

Regarding to the resulting molded article, the physical properties in an original state, compression permanent set (%), adhesion test (N) and plasma resistance as shown in Table 1 were measured under the above test conditions.

The results are shown in Fig. 1.

Table 1-1

| Blending amount: part by weight | Example | | | |
|---|---|---|---|---|
| | 1 | 2 | 3 | 4 |
| Blending components | | | | |
| Component (a):DielG912 | 100 | 100 | 100 | 100 |
| Component (a) : perfluoro elastomer *2 | | | | |
| Components (b)+(c)+catalyst: SIFEL 8070A/B | 2 | 6 | 10 | |
| Components (b)+(c)+catalyst: SIFEL 3701A/B | | | | 11 |
| peroxide crosslinking agent (perhexa25B) | 1 | 1 | 1 | 1 |

(continued)

| Blending components | | | | |
|---|---|---|---|---|
| Co-crosslinking agent (TAIC) | 4 | 4 | 4 | 4 |
| Filler | | | | |
| Primary vulcanization (mold pressure kgf/$cm^2$) | 50 | 50 | 50 | 50 |
| Primary vulcanization temperature (°C) x hr(min) | 165x15 | 165x15 | 165x15 | 165x15 |
| Secondary vulcanization electric furnace (degree of vacuum: 30Pa) | vacuum | vacuum | vacuum | vacuum |
| Secondary vulcanization temperature (°C) x hr(min) | 200x12 | 200x12 | 200x12 | 200x12 |
| Properties in an original state | | | | |
| Hardness (Shore A, degree) | 60 | 61 | 60 | 61 |
| Tensile (MPa) | 12.3 | 14.3 | 12.8 | 13.4 |
| Elongation (%) | 260% | 265% | 260% | 250% |
| 100M (MPa) | 1.3 | 1.6 | 1.3 | 1.7 |
| Compression permanent set [%] | 30 | 29 | 31 | 28 |
| Adhesion test (N) | 600 | 450 | 400 | 500 |
| Present or absence of unreacted components | absence | absence | absence | absence |
| $O_2$/$CF_4$ plasma resistance Weight loss proportion [%] (condition; 3h shield) | 0.72 | 0.56 | 0.37 | 0.55 |
| *1: The crosslinking agent and filler are contained in 100 parts by weight of "SIFEL 3701A/B".<br>*2: "TECNOFLON PFR-94" peroxide vulcanization type manufactured by Solvey Co., Ltd. | | | | |

Table 1-2

| Blending amount: part by weight | Example | | Comparative Example | |
|---|---|---|---|---|
| | 5 | 6 | 2 | 2 |
| Blending components | | | | |
| Component (a):DielG912 | | 100 | 100 | |
| Component (a): perfluoro elastomer *2 | 100 | | | |
| Components (b)+(c)+catalyst: SIFEL 8070A/B | 6 | 6 | | |
| Components (b)+(c)+catalyst: SIFEL 3701A/B | | | | 100*1 |
| peroxide crosslinking agent (perhexa25B) | 1 | 1 | 1 | *1 |
| Co-crosslinking agent (TAIC) | 4 | 4 | 4 | *1 |
| Filler | | | | *1 |
| Primary vulcanization (mold pressure kgf/$cm^2$) | 50 | 50 | 50 | 50 |
| Primary vulcanization temperature (°C) x hr(min) | 165x15 | 165x15 | 165x15 | 150x10 |
| Secondary vulcanization electric furnace (degree of vacuum: 30Pa) | vacuum | vacuum | vacuum | vacuum |
| Secondary vulcanization temperature (°C) x hr(min) | 200x12 | 180x12 | 200x12 | 200x4 |
| Properties in an original state | | | | |
| Hardness (Shore A, degree) | 65 | 61 | 60 | 69 |
| Tensile (MPa) | 12.1 | 14.2 | 14.3 | 11.8 |

(continued)

| Properties in an original state | | | | |
|---|---|---|---|---|
| Elongation (%) | 250% | 265% | 280% | 300% |
| 100M (MPa) | 3 | 1.6 | 2 | - |
| Compression permanent set [%] | 40 | 28 | 24 | 26 |
| Adhesion test (N) | 550 | 450 | 850 | 750 |
| Present or absence of unreacted components | absence | presence | - | - |
| $O_2/CF_4$ plasma resistance Weight loss proportion [%] (condition; 3h shield) | 0.01 | 0.56 | 1.02 | 0.73 |

Particle test

An O-ring was formed in the same manner as the molded article prepared in Example 1, and mounted on a sealing mounting groove (not shown) formed on an A member in a particle amount measuring apparatus 20 as schematically shown in Table 2. Then, abutting and separation of a head 23 which goes forward and backward by a driving apparatus 25 with a fluid cylinder (corresponding to opening and closing of a valve) were carried out prescribed times and then the number of particles generated was measured (N=3).

In results, the number of particles generated was 4.5 particles per 100 cycles after the open and close operation initial times (100 cycles just after mounting), it was 0.6 particle per 100 cycles after the operation several ten thousand times, it was 0.2 particle per 100 cycles after the operation thirty thousand times, it was 0.7 particle per 100 cycles after the operation fifty thousand times and it was 0.3 particle per 100 cycles after the operation one hundred thousand times.

Furthermore, the O-ring having the same size as the above size was prepared in the same manner as the molded articles obtained in Examples 2 to 6 and subjected to the particle test same as above. In results, the number of particles generated was several particles per 100 cycles after the open and close operation initial times (100 cycles just after mounting) and it was not more than 1 particle per 100 cycles after the operation from ten thousand times to fifty thousand times. Therefore, the amount of particles generated was very slight.

## Claims

**1.** A rubber composition comprising:

(a) a crosslinkable fluoro elastomer,
(b) a reactive fluorine compound (excluding the crosslinkable fluoro elastomer (a)) having a bivalent perfluoropolyether structure or a bivalent perfluoroalkylene structure and, in the end or the side chain, at least two alkenyl groups capable of addition reacting at least with a hydrosilyl group in the following organosilicon compound (c),
(c) a reactive organosilicon compound having at least two hydrosilyl groups in the molecule and capable of addition reacting at least with an alkenyl group in the reactive fluorine compound (b) wherein the total amount of the compounds (b) and (c) is from 1 to 10 parts by weight based on 100 parts by weight of the crosslinkable fluoro elastomer (a), and further comprising
(d) a vulcanizing agent (d-1), and optionally a co-crosslinking agent (d-2); wherein the reactive fluorine compound (b) and the reactive organosilicon compound (c) are liquid compounds and can gel by reaction in the presence of a catalyst; and

wherein the crosslinkable fluoro elastomer (a) comprises:

(i) a fluorovinylidene type crosslinkable fluoro elastomer (FKM) singly, or
(ii) the crosslinkable FKM and a crosslinkable perfluoro elastomer (FFKM).

**2.** The rubber compositon according to claim 1 wherein the total amount of the reactive fluorine compound (b) and the reactive organosilicon compound (c) is 1 to 10 parts by weight, the amount of the vulcanizing agent (d-1) is 0.5 to 2.5 parts by weight and the amount of the co-crosslinking agent (d-2) is 3 to 6 parts by weight, based on 100 parts by weight of the crosslinkable fluoro elastomer (a).

**3.** A sealing material for plasma treatment devices which material is obtainable by primary vulcanization molding a rubber composition as claimed in any one of claims 1 to 2 and then subjecting to secondary vulcanization at a temperature of from 150 to 300°C at atmospheric pressure or under reduced pressure.

**Patentansprüche**

**1.** Eine Kautschukzusammensetzung, umfassend:

(a) ein vernetzbares Fluorelastomer,
(b) eine reaktive Fluorverbindung (wobei das vernetzbare Fluorelastomer (a) ausgeschlossen ist) mit einer bivalenten Perfluorpolyetherstruktur oder einer bivalenten Perfluoralkylenstruktur und am Ende oder in der Seitenkette wenigstens zwei Alkenylgruppen, die wenigstens mit einer Hydrosilylgruppe in der folgenden siliciumorganischen Verbindung (c) eine Additionsreaktion eingehen können,
(c) eine reaktive siliciumorganische Verbindung, die wenigstens zwei Hydrosilylgruppen im Molekül besitzt und wenigstens mit einer Alkenylgruppe in der reaktiven Fluorverbindung (b) eine Additionsreaktion eingehen kann, wobei die Gesamtmenge an Verbindungen (b) und (c) 1 bis 10 Gewichtsteile beträgt, bezogen auf 100 Gewichtsteile des vernetzbaren Fluorelastomers (a), und ferner umfassend
(d) ein Vulkanisationsmittel (d-1) und gegebenenfalls ein Co-Vernetzungsmittel (d-2), wobei die reaktive Fluorverbindung (b) und die reaktive siliciumorganische Verbindung (c) flüssige Verbindungen sind und durch Reaktion in Gegenwart eines Katalysators gelieren können, und

wobei das vernetzbare Fluorelastomer (a) umfasst:

(i) ein vernetzbares Fluorelastomer vom Fluorvinyliden-Typ (FKM) alleine oder
(ii) das vernetzbare FKM und ein vernetzbares Perfluorelastomer (FFKM).

**2.** Die Kautschukzusammensetzung gemäß Anspruch 1, wobei die Gesamtmenge an reaktiver Fluorverbindung (b) und reaktiver siliciumorganischer Verbindung (c) 1 bis 10 Gewichtsteile beträgt, die Menge an Vulkanisationsmittel (d-1) 0,5 bis 2,5 Gewichtsteile beträgt und die Menge an Co-Vernetzungsmittel (d-2) 3 bis 6 Gewichtsteile beträgt, bezogen auf 100 Gewichtsteile des vernetzbaren Fluorelastomers (a).

**3.** Ein Dichtmittel für Plasmabehandlungsvorrichtungen, wobei das Material erhalten werden kann, indem eine wie in einem der Ansprüche 1 bis 2 beanspruchte Kautschukzusammensetzung durch eine erste Vulkanisation geformt und anschließend einer zweiten Vulkanisation bei einer Temperatur von 150 bis 300°C bei Atmosphärendruck oder unter vermindertem Druck unterworfen wird.

**Revendications**

**1.** Composition de caoutchouc comprenant :

(a) un fluoro-élastomère réticulable,
(b) un composé de fluor réactif (à l'exclusion du fluoro-élastomère réticulable (a)) ayant une structure de perfluoropolyéther bivalente ou une structure de perfluoroalkylène bivalente et, à l'extrémité ou sur la chaîne latérale, au moins deux groupes alcényle capables d'une réaction d'addition au moins avec un groupe hydrosilyle dans le composé d'organosilicium (c) suivant,
(c) un composé d'organosilicium réactif comprenant au moins deux groupes hydrosilyle dans la molécule et capable d'une réaction d'addition avec au moins un groupe alcényle dans le composé de fluor réactif (b), où la quantité totale des composés (b) et (c) est de 1 à 10 parties en poids, pour 100 parties en poids du fluoro-élastomère réticulable (a), et comprenant en outre
(d) un agent de vulcanisation (d-1) et facultativement un agent de co-réticulation (d-2) ; où le composé de fluor réactif (b) et le composé d'organosilicium réactif (c) sont des composés liquides et peuvent gélifier par réaction en présence d'un catalyseur ; et
dans laquelle le fluoro-élastomère réticulable (a) comprend :

(i) un fluoro-élastomère réticulable de type fluorovinylidène (FKM) seul, ou
(ii) le FKM réticulable et un perfluoro-élastomère réticulable (FFKM).

2. Composition de caoutchouc selon la revendication 1, dans laquelle la quantité totale du composé de fluor réactif (b) et du composé d'organosilicium réactif (c) est de 1 à 10 parties en poids, la quantité de l'agent de vulcanisation (d-1) est de 0,5 à 2,5 parties en poids et la quantité de l'agent de co-réticulation (d-2) est de 3 à 6 parties en poids, pour 100 parties en poids du fluoro-élastomère réticulable (a).

3. Matériau d'étanchéité pour des dispositifs de traitement au plasma, matériau qui est susceptible d'être obtenu par moulage avec vulcanisation primaire d'une composition de caoutchouc selon l'une quelconque des revendications 1 et 2 et ensuite par soumission à une vulcanisation secondaire à une température de 150 à 300°C à la pression atmosphérique ou sous pression réduite.

Fig.1

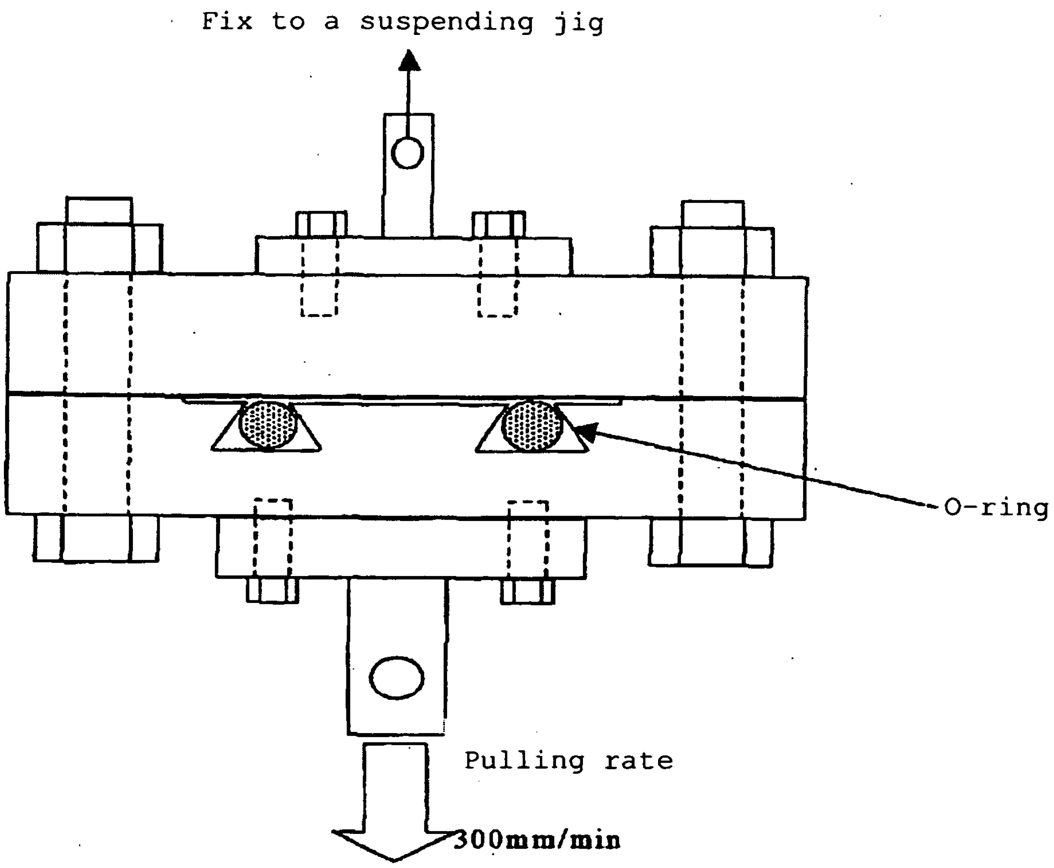

Fig.2

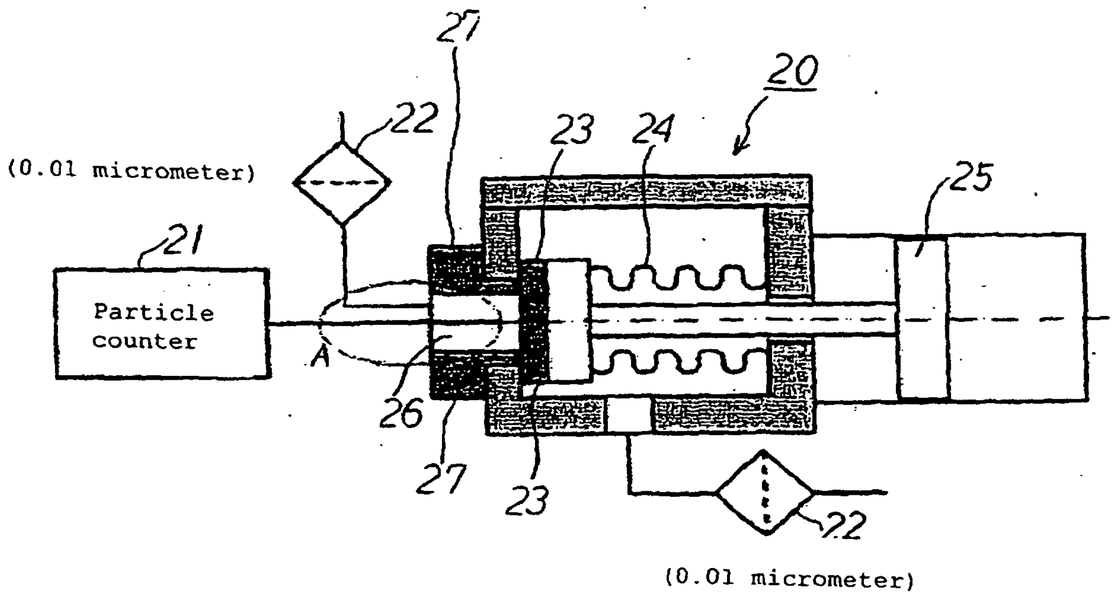
27
22
20
23
24
(0.01 micrometer)
25
21
Particle counter
A
26
27
23
22
(0.01 micrometer)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2001348462 A
- JP 2003183402 A
- JP H111999116684 A
- JP H111999116685 A
- JP 2002220486 A
- JP 11116684 A
- JP 11116685 A
- JP 20003183402 A
- JP 2003155382 A
- JP 2004134665 A

### Non-patent literature cited in the description

- Development of fluorine materials. CMC Co, 1997, 64